# EUROPÄISCHE PATENTSCHRIFT

(11) **EP 3 215 789 B1**
(45) Veröffentlichungstag und Bekanntmachung des Hinweises auf die Patenterteilung: **26.06.2019**
(21) Anmeldenummer: 15804058.4
(22) Anmeldetag: 05.11.2015
(51) Int. Cl.: F21S 41/00, F21S 41/135, F21S 41/14, F21S 41/20, F21S 41/25, F21S 41/32, F21S 41/675, F21S 41/16, F21V 9/30, F21Y 115/30, G02F 1/03

(54) **SCHEINWERFER FÜR FAHRZEUGE MIT ZUMINDEST EINER LASERLICHTQUELLE**
HEADLAMP FOR VEHICLES WITH AT LEAST ONE LASER LIGHT SOURCE
PHARE POUR VÉHICULE AVEC AU MOINS UNE SOURCE LUMINEUSE LASER

(30) Priorität: 07.11.2014 AT 508152014
(43) Veröffentlichungstag der Anmeldung: 13.09.2017
(73) Patentinhaber: ZKW Group GmbH, 3250 Wieselburg (AT)
(72) Erfinder: EDLINGER, Erik, A-1090 Wien (AT); WEBER, Emanuel, A-2500 Baden (AT)
(74) Vertreter: Patentanwaltskanzlei Matschnig & Forsthuber OG
(86) Internationale Anmeldenummer: PCT/AT2015/050281
(87) Internationale Veröffentlichungsnummer: WO 2016/070214

(56) Entgegenhaltungen:
- EP-A2- 2 063 170
- WO-A1-2013/094222
- WO-A1-2014/121315
- DE-A1-102012 112 127
- DE-A1-102013 103 410
- US-A1- 2008 055 557
- US-A1- 2014 254 188

## Beschreibung

Die Erfindung bezieht sich auf einen Scheinwerfer für Fahrzeuge, bei welchem der Laserstrahl zumindest einer Laserlichtquelle über ein Strahlablenkmittel scannend auf zumindest ein Lichtkonversionsmittel gelenkt ist, welches einen Phosphor zur Lichtkonversion aufweist, und mit einem Projektionssystem zur Projektion des an dem Lichtkonversionsmittel erzeugten Leuchtbildes auf die Fahrbahn, wie aus den gattungsgemäßen Dokument WO 2014/121315 A1 bekannt.

Der Einsatz von Laserlichtquellen in Kraftfahrzeugen gewinnt immer mehr an Bedeutung, da insbesondere Laserdioden flexiblere und effizientere Lösungen ermöglichen, wodurch neben neuen Möglichkeiten der Funktionalität auch die Leuchtdichte des Lichtbündels sowie die Lichtausbeute des Scheinwerfers erheblich gesteigert werden können.

Bei vielen bekannten Lösungen wird allerdings kein direkter Laserstrahl emittiert, um eine Gefährdung von Menschen und anderen Lebewesen durch den extrem gebündelten Lichtstrahl hoher Intensität zu vermeiden. Der Laserstrahl wird vielmehr auf einen zwischengeschalteten Konverter, der ein Lumineszenzkonversionsmaterial, kurz "Phosphor" genannt, enthält, geleitet und von diesem Lichtkonversionsmittel von z.B. blauem Licht in vorzugsweise "weißes" Licht umgewandelt, insbesondere so, dass in Überlagerung mit der gestreuten Laserstrahlung ein gesetzeskonformer Weißlichteindruck entsteht

Aus der EP 2 063 170 A2 ist ein Scheinwerfer für Kraftfahrzeuge bekannt geworden, bei welchem zur Ausleuchtung der Fahrbahn mit einem blendfreien adaptiven Fernlicht bestimmte Bereiche in Abhängigkeit von anderen Verkehrsteilnehmern bzw. in Abhängigkeit von Umgebungsparametern, wie Eigengeschwindigkeit; Stadt/Freiland/Autobahn, Wetter, Dämmerung etc. ausgespart werden können. Der Strahl eines Lasers wird über einen in zwei Raumrichtungen bewegbaren Mikrospiegel auf eine Leuchtfläche gelenkt, die zur Konvertierung des Laserlichtes in vorzugsweise weißes Licht einen Phosphor enthält. Mittels einer Linse wird das Leuchtbild der Leuchtfläche auf die Fahrbahn projiziert.

Ein gewisses Problem kann das oft etwas träge Verhalten der Laserlichtquellen bei deren Ansteuerung, insbesondere dem Ein- und Ausschalten, darstellen. Diese Trägheit, die in erster Linie auf die Notwendigkeit der Steuerung verhältnismäßig großer Ströme zurückzuführen ist, kann zu Sicherheitsproblemen führen, falls z.B. eine Notabschaltung erforderlich ist, bzw. kann ein Ausblendvorgang, beispielsweise um einen anderen Verkehrsteilnehmer nicht zu blenden, nicht in der erforderlich kurzen Zeit eingeleitet werden.

Eine Aufgabe der Erfindung liegt in der Minderung bzw. Beseitigung dieser Probleme.

Diese Aufgabe wird mit den Merkmalen von Anspruch 1 gelöst.

Eine bewährte und kostengünstige Variante zeichnet sich dadurch aus, dass das polarisierende Element ein Polarisationsfilter ist.

Falls das Polarisationselement ein polarisierender Strahlteiler ist, ergibt sich der Vorteil, dass - im Gegensatz zu einem Polarisationsfilter - keine Laserstrahlung absorbiert wird.

Vorteilhaft ist es, wenn der elektrooptische Modulator als Pockelszelle ausgebildet ist, da eine Pockelszelle de facto rein kapazitiv, ohne Wirkleistungsaufnahme geschaltet werden kann. Bei einer empfehlenswerten Variante ist vorgesehen, dass die zumindest eine Laserlichtquelle eine Laserdiode aufweist, die zusammen mit einem elektrooptischen Modulator in einem gemeinsamen Gehäuse untergebracht ist. Dank der räumlichen Nähe der optisch aktiven Elemente können benötigte Schaltspannungen gering gehalten werden.

Bei einer Variante kann vorgesehen sein, dass in dem Strahlengang der zumindest einen Laserlichtquelle zwei oder mehr elektrooptische Modulatoren hintereinander angeordnet sind. Dies ist insbesondere von Vorteil, wenn eine Pulsweitenmodulation oder ein RGB-Lasersystem verwendet werden soll.

Eine zweckmäßige Weiterbildung zeichnet sich dadurch aus, dass eine Fokussieroptik für den Laserstrahl dem elektrooptischen Modulator nachgeordnet ist. Dadurch wird verhindert, dass sich das Laserlicht in seinen Eigenschaften verändert, bevor es den elektrooptischen Modulator durchquert, sodass die elektrooptische Modulation genau und effizient erfolgen kann. Dazu ist anzumerken, dass beispielsweise jede Linse durch die sphärische Aberrationen die Randpolarisation des Lichtes verändert.

Erfindungsgemäß ist die Steuereinheit dazu eingerichtet, die Laserlichtquelle und den elektrooptischen Modulator synchron anzusteuern, und beim Abschalten der Laserlichtquelle den elektrooptischen Modulator zu aktivieren, um den Laserstrahl zu sperren, erhält man steilere Schaltflanken und in der Folge keinen verwaschenen Bildverlauf z.B. in auszublendenden Bereichen des Leuchtbildes.

Die Erfindung samt weiterer Vorteile ist im Folgenden an Hand beispielsweiser Ausführungsformen näher erläutert, die in der Zeichnung veranschaulicht sind. In dieser zeigen
Fig. 1 die für die Erfindung wesentlichen Komponenten eines Scheinwerfers und deren Zusammenhang in einer schematischen Darstellung bei einer beispielsweisen Ausführungsform,
Fig. 2 in einem Diagramm ein beispielsweises Leuchtbild sowie den zeitlichen Verlauf von Ansteuerspannungen der Laserlichtquelle bzw. des Modulators,
Fig. 3 schematisch den Strahlenverlauf mit einem dem Modulator nachgeordneten Polarisationsfilter,
Fig. 4 in einer Darstellung ähnlich Fig. 3 die Verwendung eines polarisierenden Strahlteilers,
Fig. 5 in einer Darstellung ähnlich Fig. 3 und 4 einem dem Polarisationselement nachgeschaltete Fokussieroptik und
Fig. 6 eine Laserdiode, die zusammen mit einem elektrooptischen Modulator in einem gemeinsamen Gehäuse zusammengefasst ist.

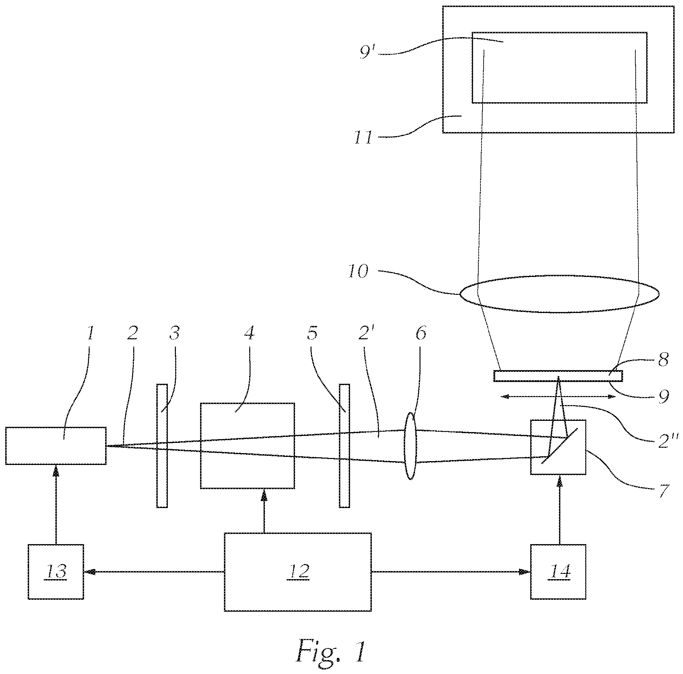

**Fig.1** stellt schematisch einen Scheinwerfer mit den für die Erfindung wesentlichen Teilen sowie den Strahlenverlauf dieses Scheinwerfers dar, wobei es klar sein sollte, dass ein KFZ-Scheinwerfer noch viele andere Teile enthält, die seinen sinnvollen Einsatz in einem Kraftfahrzeug, wie insbesondere einem PKW oder Motorrad, ermöglichen. Lichttechnischer Ausgangspunkt des Scheinwerfers ist eine Laserlichtquelle 1, die einen Laserstrahl 2 abgibt. Dieser Laserstrahl 2 durchläuft nun ein erstes Polarisationsfilter 3, sodann einen beispielsweise als Pockelszelle ausgebildeten elektrooptischen Modulator 4 und ein zweites Polarisationsfilter 5. Der von dort austretende Laserstrahl 2' wird nun mit Hilfe einer Fokussieroptik 6 fokussiert und über ein beispielsweise als Mikrospiegel ausgebildetes Strahlablenkmittel 7 zu einem Lichtkonversionsmittel 8 geführt, das in bekannter Weise einen Phosphor zur Lichtkonversion aufweist. Die Fokussieroptik kann eine Linse oder ein Linsensystem sein und ebenso ein Reflektorsystem mit ein oder mehreren Reflektoren, wobei eine Kombination von Linsen und Reflektoren möglich ist. Zweckmäßigerweise weisen die Polarisationsfilter 3 und 5 gleiche optische Eigenschaften auf. Zu der Anwendung der Fokussieroptik 6 ist anzumerken, dass nicht notwendigerweise eine solche vorhanden sein muss, es könnte ganz allgemein eine Optik zur gewünschten Beeinflussung des Laserstrahls, beispielsweise auch zu dessen Aufweiten, vorgesehen sein.

Der von dem Mikrospiegel 7 abgelenkte Laserstrahl 2" erzeugt scannend ein Leuchtbild 9 auf dem Phosphor des Lichtkonversionsmittels 8 und dieses Leuchtbild 9 wird mit Hilfe eines Projektionssystems 10 des Scheinwerfers, im vorliegenden Fall einer Linse, auf die Fahrbahn 11 als Lichtbild 9' projiziert. Der Begriff "Fahrbahn" wird hier zur vereinfachten Darstellung verwendet, denn selbstverständlich hängt es von den örtlichen Gegebenheiten ab, ob sich das Lichtbild 9' tatsächlich auf der Fahrbahn befindet oder auch darüber hinaus erstreckt. Prinzipiell entspricht das Bild 9' einer Projektion auf eine vertikale Fläche und als solche ist hier auch die "Fahrbahn" dargestellt, entsprechend der einschlägigen Normen, die sich auf die KFZ-Beleuchtungstechnik beziehen.

Vorgesehen ist weiters eine Steuereinheit 12, welche ihrerseits auf eine Laseransteuerung 13 wirkt und ebenso auf eine Spiegelansteuerung 14. Dabei kommt der Laseransteuerung 13 das Ein- und Ausschalten der Laserlichtquelle 1 zu und ebenso die Regelung bzw. Steuerung der Laserintensität.

Die Steuereinheit dient auch zur Stromversorgung sowie zur Überwachung der Laseremission oder z.B. zur Temperaturkontrolle und sie ist weiters zum Modulieren der Intensität des abgestrahlten Laserstrahls eingerichtet. Unter "Modulieren" wird in Zusammenhang mit der vorliegenden Erfindung verstanden, dass die Intensität der Laserlichtquelle geändert werden kann, sei es kontinuierlich oder gepulst, im Sinne eines Ein- und Ausschaltens. Wesentlich ist, dass die Lichtleistung analog dynamisch geändert werden kann, je nachdem, an welcher Winkelposition der Mikrospiegel des Strahlablenkmittels 7 steht. Zusätzlich gibt es noch die Möglichkeit des Ein- und Ausschaltens für eine gewisse Zeit, um definierte Stellen nicht zu beleuchten oder auszublenden. Ein Beispiel eines dynamischen Ansteuerungskonzepts zur Erzeugung eines Bildes durch einen scannenden Laserstrahl ist etwa in der österreichischen Patentanmeldung A 50454/2013 der Anmelderin vom 16. Juli 2013 beschrieben. Die Laserlichtquelle enthält in der Praxis oft mehrere Laserdioden, beispielsweise sechs von z.B. je 1 Watt, um die gewünschte Leistung bzw. den geforderten Lichtstrom zu erreichen.

Die Laserlichtquelle 1 gibt beispielsweise blaues Licht oder UV-Strahlung ab, und besitzt allenfalls eine Kollimatoroptik sowie eine Fokussieroptik, wobei die Ausbildung der Optik unter anderem von der Art, Anzahl und der räumlichen Platzierung der verwendeten Laserdioden, von der erforderlichen Strahlqualität und von der gewünschten Laserspotgröße am Lichtkonversionsmittel abhängt.

Die Spiegelsteuerung 14 wiederum dient dazu, den Mikrospiegel des Strahlablenkmittels 7 z.B. in zwei zueinander orthogonalen Richtungen in Schwingungen konstanter, in vielen Fällen jedoch in x- Richtung und y-Richtung unterschiedlicher, Frequenz zu versetzen, wobei diese Schwingungen insbesondere mechanischen Eigenfrequenzen des Mikrospiegels in den entsprechenden Achsen entsprechen können. Es sei jedoch angemerkt, dass an Stelle eines Mikrospiegels auch andere Strahlablenkmittel, wie z.B. bewegbare Prismen, Verwendung finden können. Die Steuereinheit 12 steuert außerdem den elektrooptischen Modulator 4 an, wobei im Falle einer Pockelszelle eine relativ hohe Spannung in einer Größenordnung von einigen100 V benötigt wird, um die erwünschte Drehung der Polarisationsebene zu bewirken. Die benötigte Ansteuerspannung hängt allerdings von der gewünschten Drehung der Polarisationsebene und von der Größe des verwendeten Kristalls ab. Je kleiner der Kristall ist, umso geringer kann die Ansteuerspannung sein.

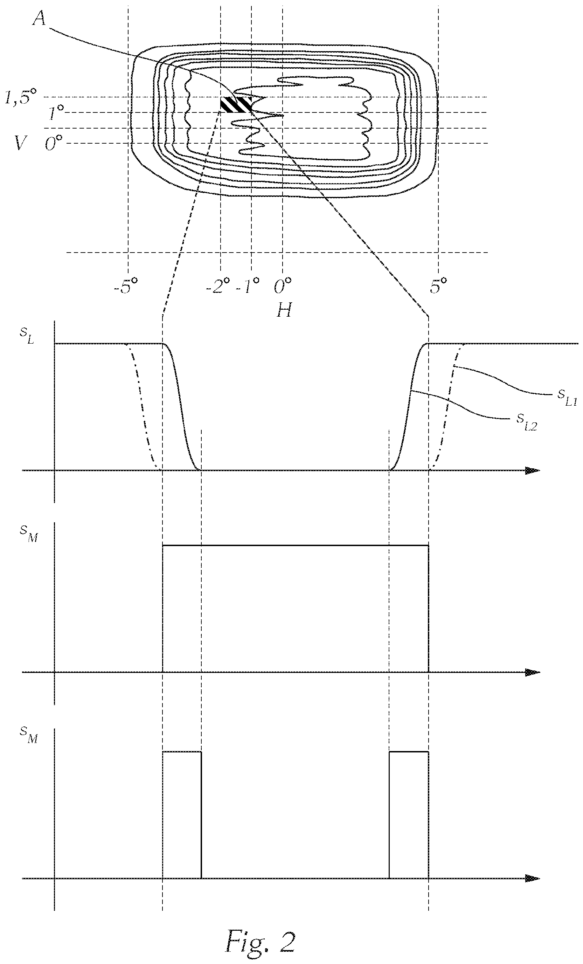

Die Funktion des Scheinwerfers nach der Erfindung mit dem elektrooptischen Modulator 4 wird an Hand der **Fig. 2**, welche ein beispielsweises Ausblendszenario darstellt, genauer erläutert. Dabei ist in Fig. 2 oben eine bestimmte momentane Leuchtdichteverteilung des auf den Phosphor des Lichtkonversionsmittels 8 bzw. auf die Fahrbahn 11 gescannten/projizierten Leuchtbildes 9 bzw. Lichtbildes 9' dargestellt. In x-Richtung H (horizontal) bzw. y-Richtung V (vertikal) sind beispielhafte Winkelwerte eingetragen. Hervorgehoben durch Schraffur ist ein Bereich A, der ausgeblendet werden soll.

Unter der Leuchtdichteverteilung sind ein zeitlicher Verlauf des Ansteuersignals sL der Laserlichtquelle 1 und darunter zwei unterschiedliche zeitliche Verläufe eines Ansteuersignals sM für den elektrooptischen Modulator 4 gezeigt.

Erfindungsgemäß arbeiten die Ansteuerung der Laserlichtquelle 1 und die Ansteuerung des elektrooptischen Modulators 4 synchronisiert. Beispielsweise werden aufgrund eines Ausblendszenarios in einem bestimmten Bereich im Bild 9 bzw. 9', über den der Laserspot des Laserstrahls gerade gescannt wird, von der gemeinsamen Steuereinheit 12 ein Laseransteuerungssignal sL zum Ausschalten der Laserlichtquelle 1 und ein Ansteuerungssignal sM für den Modulator 4 abgegeben, welches diesen in einen Sperrzustand oder abschwächenden Zustand bringen soll - immer unter Berücksichtigung zumindest eines im Strahlengang befindlichen Polarisators. Damit wird sichergestellt, dass der Strahlengang der Laserlichtquelle 1 sofort "gesperrt" wird und kein verwaschenes Leuchtbild aufgrund der langsamen Ansteuerung des Lasers auftritt. Sobald der Bereich wieder beleuchtet werden soll, müsste schon in der Zeit, welche die elektronische Regelung benötigt, um vollständig wieder auf 100% zu schalten, der Modulator auf aktiv geschaltet werden.

Hier sei angemerkt, dass das genannte Beispiel für einen kompletten EIN/AUS Zustand natürlich auch auf ein Szenario umsetzbar ist, bei welchem beispielsweise von 100% Helligkeit bloß auf 50% geschaltet werden soll, oder allgemein gesagt, eine Dimmen stattfinden soll, bei dem gleichfalls scharfe Ausblendkanten erwünscht sind.

Fig. 2 zeigt detaillierter zunächst die konventionelle elektrische Ansteuerung der Laserlichtquelle 1 von 100% auf 0% und anschließend wieder auf 100%. Die strichpunktierte "Einschaltkurve" sL1 zeigt den üblichen Schaltzeitpunkt, der so gesetzt wird, dass in der Zeit des auszublendenden Bereichs die Laserlichtquelle 1 sicher ausgeschaltet ist, die Kurve sL2 zeigt hingegen den vorgelagerten Einschaltzeitpunkt nach einer bevorzugten Ausführung der Erfindung.

Wenn der elektrooptische Modulator 4 von "Inaktiv" auf "Aktiv" angesteuert wird, wird die Polarisation gedreht und folglich der Strahl aufgrund des Polarisationselementes gesperrt (oder geschwächt). Der elektrooptische Modulator 4 bleibt während der gesamten Zeit des auszublendenden Bereichs (hier horizontal von -2° auf -1°) aktiv. Ein weiterer Vorteil der Kombination einer Ansteuerung einerseits der Laserlichtquelle und andererseits des elektrooptischen Modulators liegt in der Redundanz dieser Steuerung, da der Laserstrahl auch dann noch ausgeblendet werden kann, wenn eine Steuerung ausfällt. Vorteilhafterweise bekommt die Laseransteuerung 13 bereits vor dem Ende des Ausblendszenarios das Signal, um wieder auf 100% zu schalten (Kurve sL2), besonders bevorzugt genau um jene Zeit früher, die eben benötigt wird, um von 0% auf 100% zu kommen Damit wird jene Zeit minimiert, in der die Ansteuerung der Laserlichtquelle 1 unnötigerweise bereits den Umschaltvorgang beendet hat, obwohl der auszublendende Bereich noch gar nicht durchlaufen wurde. Dieses Beispiel gilt sinngemäß auch für jene Fälle, bei welchen, wie auch schon oben erwähnt, die Intensität nur teilweise verringert werden soll. Dabei wird der Modulator 4 nur teilweise eine Drehung der Polarisation und somit nur eine teilweises Sperren des Laserstrahls bewirken.

Das unterste Diagramm der Fig. 2 zeigt die bevorzugte Ansteuerung des elektrooptischen Modulators 4. Hier wird der Modulator 4 nur während jenen Zeiten aktiv geschaltet, in welchen die elektronische Laseransteuerung 13 einen "Schaltvorgang" vornimmt. Damit kann das System am effizientesten genutzt werden, da der Modulator 4 hier in Kombination mit der elektrischen Ansteuerung des Lasers im Gegensatz zu Systemen mit lediglich optischer Modulation oder nur elektrischer Modulation der Laserlichtquelle 1 nicht während des gesamten Ausblendzeitraums aktiv geschaltet werden muss und auch der Laserstrahl nicht zusätzlich über ein Filter absorbiert oder umgelenkt werden muss. Daher entstehen nur während jener Zeiten, in denen eine scharfe Ausblendkante erwünscht ist, Verluste, die dann nur noch von der Beschaffenheit der Schaltflanken der elektrischen Ansteuerung der Laserlichtquelle 1 abhängen.

Nachdem oben eine spezifische Ausführungsform und ebenso eine besondere Funktionsweise einer solchen Ausführungsform nach der Erfindung beschrieben wurde, sollen nachstehend schematisch und kurz weitere Varianten der Erfindung beschrieben werden, wobei diese Aufzählung keineswegs erschöpfend ist, der Fachmann vielmehr im Rahmen des durch die Patentansprüche gegebenen Schutzbereichs andere zweckmäßige Lösungen finden wird.

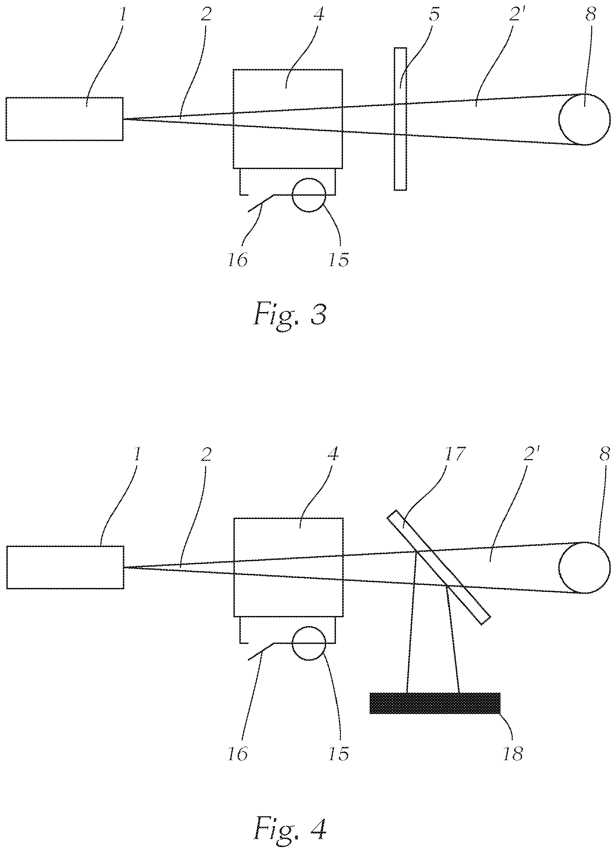

**Fig. 3** zeigt schematisch eine Laserlichtquelle 1, von welcher ein Laserstrahl 2 ausgeht und den schon oben beschriebenen elektrooptischen Modulator durchsetzt. Dieser Modulator 4 kann beispielsweise eine Pockelszelle sein, an die eine Gleichspannung 15 mit Hilfe eines gesteuerten Schalters 16 gelegt werden kann. Die Funktionen des gesteuerten Schalters 16 und der Gleichspannung 15 sind üblicherweise in einer Steuereinheit, z.B. der Steuereinheit 12 der Fig. 1 integriert. Der aus dem elektrooptischen Modulator 14 austretende Laserstrahl durchsetzt ein Polarisationsfilter 5 und gelangt dann als Laserstrahl 2' zu den weiter oben ausführlich beschriebenen Lichtkonversionsmittel 8. Die weiteren Teile des Scheinwerfers sind in dieser und auch in den folgenden Figuren nicht mehr näher beschrieben, da sie bereits Gegenstand der obigen Erläuterungen waren. Im Gegensatz zu der Ausführung nach Fig. 1 ist somit hier lediglich ein einziges Polarisationsfilter 5 vorgesehen.

Bei der Ausführung nach **Fig. 4**, die sonst jener nach Fig. 3 entspricht, ist anstelle des Polarisationsfilters 5 ein polarisierender Strahlteiler 17 vorgesehen, von dem aus ein polarisierter Laserstrahl 2' zu dem Lichtkonversionsmittel 8 verläuft. Der reflektierte und nicht benötigte Teil der Laserstrahlung wird auf einen Absorber 18 gelenkt, dem die Aufgabe zukommt, diesen Teil der Laserstrahlung sicher aufzufangen, damit er nicht zu Störungen oder Schäden führt.

Zu dem Polarisator, der im Prinzip auch ein Drahtgitterpolarisator sein könnte, ist anzumerken, dass eine Laserlichtquelle im Allgemeinen kohärentes Licht emittiert. Außerdem ist bei den meisten Laserlichtquellen das emittierte Licht linear polarisiert, entweder horizontal oder vertikal. Vorteilhafterweise verwendet man für die Erfindung einen solchen Laser, der linear polarisiertes Licht emittiert.

Das erste Polarisationsfilter ist mit Vorteil dazu eingerichtet, genau jenes polarisierte Licht durchzulassen welches die Laserlichtquelle emittiert. Da aufgrund von Herstellungstoleranzen damit gerechnet werden muss, dass von der Laserlichtquelle nicht perfekt horizontal oder vertikal linear polarisiertes Licht ausgeht und, so wie schon beschrieben, das System dann nicht so effizient wäre, ist es vorteilhaft das genannte erste Polarisationsfilter anzuordnen.

Das von der Laserlichtquelle emittierte Licht sei nun beispielsweise horizontal linear polarisiert. Nun drehe der elektrooptische Modulator im aktiven Zustand das horizontal linear polarisierte Licht auf ein vertikal linear polarisiertes Licht, doch bewirkt dies noch kein "Sperren" des Laserlichtes, es wird lediglich die Polarisation verändert. Folglich muss für ein tatsächliches Sperren des Laserstrahls ein Polarisationsfilter dem elektrooptischen Modulator nachgeordnet sein. Dieses nachgeordnete Polarisationsfilter muss dann natürlich dazu eingerichtet sein, auch jenes Licht durchzulassen, welches von der Laserlichtquelle emittiert wird, im vorliegenden Beispiel horizontal linear polarisiertes Licht. Alles andere wird absorbiert oder reflektiert, je nachdem, von welcher Art das verwendete polarisierendes Element ist.

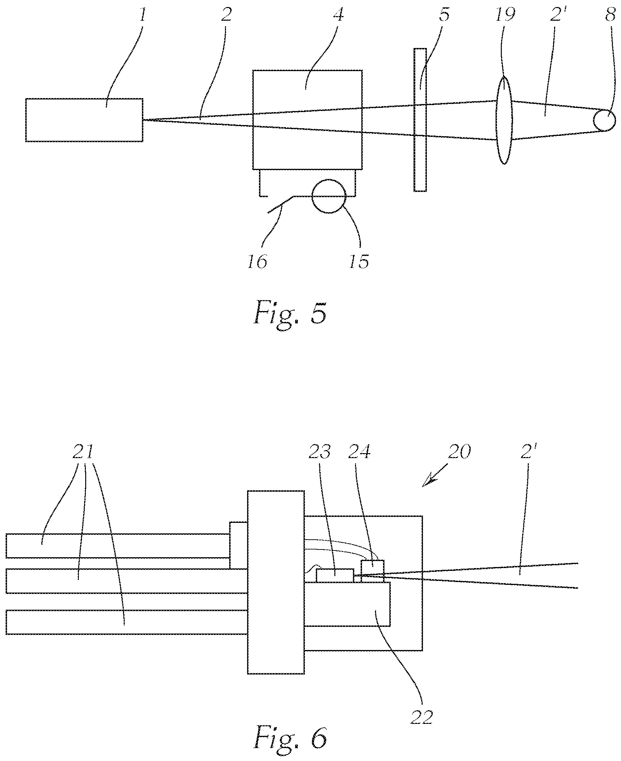

Bei der Ausführung nach **Fig. 5**, die in Prinzip jener nach Fig. 3 entspricht, ist die im Allgemeinen für den Laserstrahl erforderliche Fokussieroptik 19, die hier vereinfachend als Einzellinse dargestellt ist, dem elektrooptischen Modulator 4, und in diesem Fall auch dem Polarisationsfilter 5, nachgeordnet. Wie bereits weiter oben angemerkt wird auf diese Weise verhindert, dass sich das Laserlicht in seinen Eigenschaften verändert, bevor es den elektrooptischen Modulator durchquert, und die elektrooptische Modulation kann genau und effizient erfolgen.

An dieser Stelle sei angemerkt, dass bei den Ausführungen nach den Fig. 3 bis 5 der den Modulator 4 bzw. ein Polarisationselement 5, 17 durchsetzende Laserstrahl, der gemäß Fig. 5 auch noch durch eine Fokussieroptik 19 fokussiert wird, auf das Lichtkonversionsmittel 8 fällt. Bei den meisten Ausführungen wird allerdings, wie dies in Fig. 1 gezeigt ist, vor dem Lichtkonversionsmittel 8 noch ein Strahlablenkmittel 7 wie in Fig. 1 liegen. Ein derartiges Strahlablenkmittel 7 kann vorhanden sein, muss jedoch nicht zwingend Teil eines Scheinwerfers sein. Die Erfindung kann somit auch bei Scheinwerfern im weitesten Sinn angewendet werden, welche nicht nach dem Prinzip eines scannenden Laserstrahls funktionieren. Andererseits kann die Erfindung, und dies wurde bereits oben erwähnt, auch für Scheinwerfer angewendet werden, die ohne Lichtkonversionsmittel das Auslangen finden und beispielsweise drei Laserstrahlen verwenden, die zusammen den gewünschten Farbeindruck ergeben.

Es wird noch auf **Fig. 6** verwiesen, die ein handelsübliches TO-Gehäuse 20 mit Anschlüssen 21 zeigt, wobei in dem Gehäuse 20 auf einem Träger 22 eine Laserdiode 23 und dieser optisch nachgeordnet eine Pockelszelle 24 angeordnet sind. Der austretende Laserstrahl 2' kann dann beispielsweise noch fokussiert und über einen Mikrospiegel scannend auf ein Lichtkonversionsmittel gelenkt werden, wie dies in Fig. 1 dargestellt ist.

Der elektrooptische Modulator 4 nach der Erfindung kann auch zum Dimmen eines Laserstrahls verwendet werden, wenn man den Modulator 4 entsprechend einer Pulsweitenmodulation ansteuert. Ebenso kann man ein Dimmen dadurch erreichen, dass man die an den Modulator 4, beispielsweise eine Pockelszelle angelegte Spannung variiert, wodurch eine entsprechende schwächere oder stärkere Drehung der Polarisationsebene verursacht wird. Ebenso ist es auch möglich, mehrere elektrooptische Modulatoren im Strahlengang hintereinander anzuordnen und so ansteuern, dass beispielsweise ein erster Modulator eine Drehung verursacht, die zu einem Dimmen bzw. Abschwächen des Laserlichts von 25% führt und ein weiterer Modulator so angesteuert wird, dass er eine Abschwächung von 75% verursacht. Auf diese Weise könnte man mit zwei hintereinander angeordneten elektrooptischen Modulatoren 4 Abschwächungsstufen von 0, 25, 75 und 100% erzielen und man benötigt keine variable Ansteuerschaltung für die Modulatoren, sondern lediglich feste Spannungen zum Ein- und Ausschalten bzw. Aktivieren und Deaktivieren. Bei dieser Ausführung muss nicht jedem Modulator ein Polfilter nachgeordnet sein, es genügt auch einziges gemeinsames Polarisationsfilter im Strahlengang nach den mehreren elektrooptischen Modulatoren.

Schließlich möge erwähnt werden, dass es auch möglich wäre, eine der beschriebenen Anordnungen "invers" zu nutzen. Damit ist gemeint, man kann die elektrooptischen Modulatoren so auslegen, dass sie im aktiven Schaltzustand für den Laserstrahl durchlässig sind und im inaktiven Zustand den Laserstrahl absorbieren/ reflektieren. Allerdings bleibt in diesem Fall der Modulator, z.B. ein Kristall, im Mittel länger eingeschaltet (aktiv geschaltet sein) als ausgeschaltet (inaktiv) und die Verluste in dem Modulator werden durch die länger dauernde Ansteuerung höher. Auch dies ist ein Grund dafür, dass beide Polarisationsfilter gleiche optische Eigenschaften aufweisen sollten, und das System so nutzt, dass im aktiven Zustand des Modulators der Strahlengang durch das nachgeordnete Polfilter gesperrt wird.

### Liste der Bezugszeichen

- 1: Laserlichtquelle
- 2, 2', 2": Laserstrahl
- 3: Polarisationsfilter, erstes
- 4: elektrooptischer Modulator
- 5: Polarisationsfilter, zweites
- 6: Fokussieroptik
- 7: Strahlablenkmittel
- 8: Lichtkonversionsmittel
- 9: Leuchtbild
- 9': Lichtbild
- 10: Projektionssystem
- 11: Fahrbahn
- 12: Steuereinheit
- 13: Laseransteuerung
- 14: Spiegelansteuerung
- 15: Gleichspannungsquelle
- 16: Schalter, gesteuerter
- 17: polarisierender Strahlteiler
- 18: Absorber
- 19: Fokussieroptik
- 20: TO-Gehäuse
- 21: Anschlüsse
- 22: Träger
- 23: Laserdiode
- 24: Pockelszelle

## Patentansprüche

1. Scheinwerfer für Fahrzeuge, bei welchem der Laserstrahl zumindest einer Laserlichtquelle (1) über ein Strahlablenkmittel (7) scannend auf zumindest ein Lichtkonversionsmittel (8) gelenkt ist, welches einen Phosphor zur Lichtkonversion aufweist, mit einem Projektionssystem (10) zur Projektion des an dem Lichtkonversionsmittel erzeugten Leuchtbildes (9) als Lichtbild (9') auf die Fahrbahn (11) und mit einer auf eine Laseransteuerung (13) und das Strahlablenkmittel (7) wirkenden Steuereinheit (12), wobei die Steuereinheit (12) zur Ansteuerung des Strahlablenkmittels (7) vorgesehen ist, um während einer Zeitdauer in einem bestimmten Bereich des Leuchtbildes (9) bzw. Lichtbildes (9') die Intensität zu verringern,
**dadurch gekennzeichnet, dass**
im Strahlengang der zumindest einen Laserlichtquelle (1) zumindest ein in dem Strahlengang vor dem Lichtkonversionsmittel (8) liegender, auf die Polarisation des Lichtes wirkender elektrooptischer Modulator (4) angeordnet ist und im Strahlengang zumindest nach dem Modulator ein Polarisationselement (3, 5, 17) angeordnet ist,
und die Steuereinheit (12) ein Laseransteuersignal (s_{L}) sowie ein Ansteuerungssignal (s_{M}) an den zumindest einen elektrooptischen Modulator (4)abgibt, um diesen während der Zeitdauer in einem bestimmten Bereich des Leuchtbildes (9) bzw. Lichtbildes (9') in einen Sperrzustand oder abschwächenden Zustand zu bringen, sodass die Ansteuerung der Laserlichtquelle (1) und die Ansteuerung des optischen Modulators (4) synchronisiert erfolgt.

2. Scheinwerfer nach Anspruch 1, **dadurch gekennzeichnet, dass** das polarisierende Element (3, 5) ein Polarisationsfilter ist.

3. Scheinwerfer nach Anspruche 1, **dadurch gekennzeichnet, dass** das polarisierende Element (17) ein polarisierender Strahlteiler ist.

4. Scheinwerfer nach einem der Ansprüche 1 bis 3, **dadurch gekennzeichnet,**
**dass** der elektrooptische Modulator (4) als Pockelszelle ausgebildet ist.

5. Scheinwerfer nach einem der Ansprüche 1 bis 4, **dadurch gekennzeichnet, dass** die zumindest eine Laserlichtquelle (1) eine Laserdiode (23) aufweist, die zusammen mit einem elektrooptischen Modulator (24) in einem gemeinsamen Gehäuse (20) untergebracht ist.

6. Scheinwerfer nach einem der Ansprüche 1 bis 5, **dadurch gekennzeichnet, dass** in dem Strahlengang der zumindest einen Laserlichtquelle (1) zwei oder mehr elektrooptische Modulatoren hintereinander angeordnet sind.

7. Scheinwerfer nach einem der Ansprüche 1 bis 6, **dadurch gekennzeichnet, dass** eine Fokussieroptik (6) für den Laserstrahl (2') dem elektrooptischen Modulator (4) nachgeordnet ist.

8. Scheinwerfer nach einem der Ansprüche 1 bis 7, **dadurch gekennzeichnet, dass** die Steuereinheit (12) dazu eingerichtet ist, die Laserlichtquelle (1) und den elektrooptischen Modulator (4) synchron anzusteuern, und beim Abschalten der Laserlichtquelle den elektrooptischen Modulator zu aktivieren, um den Laserstrahl zu sperren.

## Claims

1. Headlamp for vehicles, in which the laser beam of at least one laser light source (1) is directed toward at least one light-converting means (8) in a scanning manner by means of a beam-deflecting means (7), said at least one light-converting means having a phosphor for converting light, and comprising a projection system (10) for projecting the illuminated image (9) produced at the light-converting means as light image (9') onto the roadway (11), and comprising a control unit (12) which acts on a laser controller (13) and the beam-deflecting means (7), wherein the control unit (12) is provided for controlling the beam-deflecting means (7), in order to reduce the intensity in a particular region of the illuminated image (9) or light image (9') during a time interval,
**characterized in that**
at least one electro-optical modulator (4), which is located before the light-converting means (8) in the beam path and affects the polarization of the light, is arranged in the beam path of the at least one laser light source (1), and a polarization element (3, 5, 17) is arranged in the beam path at least after the modulator,
and the control unit (12) emits a laser control signal (s_{L}) and a control signal (s_{M}) to the at least one electro-optical modulator (4), in order to bring the latter in a particular region of the illuminated image (9) or light image (9') into a disabled state or attenuating state during a time interval, so that the control of the laser light source (1) and the control of the optical modulator (4) are synchronized.

2. Headlamp according to Claim 1, **characterized in that** the polarization element (3, 5) is a polarization filter.

3. Headlamp according to Claim 1, **characterized in that** the polarizing element (17) is a polarizing beam divider.

4. Headlamp according to any one of Claims 1 to 3, **characterized in that** the electro-optical modulator (4) is implemented as a Pockels cell.

5. Headlamp according to any one of Claims 1 to 4, **characterized in that** the at least one laser light source (1) comprises a laser diode (23), which is accommodated together with an electro-optical modulator (4) in a common housing (20).

6. Headlamp according to any one of Claims 1 to 5, **characterized in that** two or more electro-optical modulators are arranged sequentially in the beam path of the at least one laser light source (1).

7. Headlamp according to any one of Claims 1 to 6, **characterized in that** a set of focusing optics (6) for the laser beam (2') is arranged downstream of the electro-optical modulator (4).

8. Headlamp according to any one of Claims 1 to 7, **characterized in that** the control unit (12) is configured to synchronously control the laser light source (1) and the electro-optical modulator (4), and to activate the electro-optical modulator when the laser light source is switched off in order to disable the laser beam.

## Revendications

1. Phare pour véhicule, pour lequel le faisceau laser d'au moins une source lumineuse laser (1) est dirigé de façon balayante par un moyen d'orientation de faisceau (7) sur au moins un moyen de conversion de lumière (8), lequel comporte un phosphore pour conversion de lumière, avec un système de projection (10) pour la projection sur la chaussée (11) de l'image lumineuse (9) produite sur le moyen de conversion de lumière en tant que forme de faisceau (9') et avec une unité de commande (12) agissant sur une commande de laser (13) et le moyen d'orientation de faisceau (7), sachant que l'unité de commande (12) est prévue pour commander le moyen de d'orientation de faisceau (7) pour réduire l'intensité pendant une période de temps dans une certaine zone de l'image lumineuse (9) ou de la forme de faisceau (9'),
**caractérisé en ce que**
dans la trajectoire de faisceau d'au moins une source lumineuse laser (1) est placé au moins un modulateur (4) électro-optique situé dans la trajectoire de faisceau devant le moyen de conversion de lumière (8), agissant sur la polarisation de la lumière et un élément de polarisation (3, 5, 17) est placé dans la trajectoire de faisceau au moins après le modulateur,
et l'élément de commande (12) émet un signal de commande laser (S_{L}) ainsi qu'un signal d'activation (S_{M}) vers au moins un modulateur électro-optique (4) pour mettre celui-ci pendant la période de temps dans une certaine zone de l'image lumineuse (9) ou de la forme de faisceau (9') dans un état de blocage ou un état affaiblissant de telle sorte que l'activation de la source lumineuse laser (1) et l'activation du modulateur optique (4) aient lieu de façon synchronisée.

2. Phare selon la revendication 1, **caractérisé en ce que** l'élément polarisant (3, 5) est un filtre de polarisation.

3. Phare selon la revendication 1, **caractérisé en ce que** l'élément polarisant (17) est un séparateur de faisceau polarisant.

4. Phare selon l'une quelconque des revendications 1 à 3, **caractérisé en ce que** le modulateur électro-optique (4) est constitué en tant que cellule de Pockel.

5. Phare selon l'une quelconque des revendications 1 à 4, **caractérisé en ce qu'**au moins une source lumineuse laser (1) comporte une diode laser (23), qui est conjointement logée dans un boîtier commun (20) avec un modulateur électro-optique (24).

6. Phare selon l'une quelconque des revendications 1 à 5, **caractérisé en ce que** deux ou plusieurs modulateurs électro-optiques sont placés l'un derrière l'autre dans la trajectoire de faisceau d'au moins une source lumineuse laser (1).

7. Phare selon l'une quelconque des revendications 1 à 6, **caractérisé en ce qu'**un système optique de focalisation (6) pour le faisceau laser (2') est disposé après le modulateur électro-optique (4).

8. Phare selon l'une quelconque des revendications 1 à 7, **caractérisé en ce que** l'unité de commande (12) est agencée pour commander de façon synchrone la source lumineuse laser (1) et le modulateur électro-optique (4) et active le modulateur électro-optique lors de l'arrêt de la source lumineuse laser pour bloquer le faisceau laser.
